# EUROPEAN PATENT APPLICATION

(11) **EP 4 329 397 A1**
(43) Date of publication of application: **28.02.2024**
(21) Application number: 21937383.4
(22) Date of filing: 23.04.2021
(51) Int. Cl.: H04W 68/02

(54) **CAPABILITY DETERMINATION METHOD AND APPARATUS, AND CAPABILITY INDICATION METHOD AND APPARATUS**

(71) Applicant: Beijing Xiaomi Mobile Software Co., Ltd., Beijing 100085 (CN)
(72) Inventor: HONG, Wei, Beijing 100085 (CN)
(74) Representative: Hughes, Andrea Michelle
(86) International application number: PCT/CN2021/089438
(87) International publication number: WO 2022/222155

(57) **Abstract**

The present disclosure relates to a capability determination method for use in a core network, the method comprising: receiving first capability information sent by a communication device; and, on the basis of the first capability information, determining whether a target base station supports sending paging reasons. According to the present disclosure, the communication device may send the first capability information to the core network to inform the core network whether the target base station supports sending paging reasons. Thus, the core network can determine whether the target base station supports sending paging reasons and, when the core network subsequently needs to instruct a base station to solve a communication conflict problem for a terminal, can accurately select a base station capable of sending paging reasons to the terminal in order to solve the communication conflict problem for the terminal, which is conducive to ensuring that communication conflict problems are promptly solved.

## Description

### TECHNICAL FIELD

The disclosure relates to a field of communication technology, in particular to a capability determination method, a capability indication method, a capability determination apparatus, a capability indication apparatus, a communication device and a computer-readable storage medium.

### BACKGROUND

Multiple Subscriber Identity Module (SIM) cards can be configured in a multi-card terminal for communication through the multiple SIM cards. However, during the communication process, communication conflicts may occur among the multiple SIM cards, thereby affecting a communication effect of the terminal.

### SUMMARY

In view of this, the embodiments of the disclosure provide a capability determination method, a capability indication method, a capability determination apparatus, a capability indication apparatus, a communication device and a computer-readable storage medium, to solve technical problems in the related art.

According to a first aspect of the embodiments of the disclosure, a capability determination method, performed by a core network, is provided. The method includes: receiving first capability information sent by a communication device; and determining whether a target base station supports sending a paging reason according to the first capability information.

According to a second aspect of the embodiments of the disclosure, a capability indication method, performed by a communication device, is provided. The method includes: sending first capability information to a core network, in which the first capability information is configured to indicate whether a target base station supports sending a paging reason.

According to a third aspect of the embodiments of the disclosure, a capability determination apparatus, performed by a core network, is provided. The apparatus includes: a capability receiving module, configured to receive first capability information sent by a communication device; and a support determining module, configured to determine whether a target base station supports sending a paging reason according to the first capability information.

According to a fourth aspect of the embodiments of the disclosure, a capability indication apparatus, performed by a communication device, is provided. The apparatus includes: a capability sending module, configured to send first capability information to a core network, in which the first capability information is configured to indicate whether a target base station supports sending a paging reason.

According to a fifth aspect of the embodiments of the disclosure, a communication device including a processor and a memory for storing computer programs is provided. When the computer programs are executed by the processor, a capability determination method is implemented.

According to a sixth aspect of the embodiments of the disclosure, a communication device including a processor and a memory for storing computer programs is provided. When the computer programs are executed by the processor, a capability indication method is implemented.

According to a seventh aspect of the embodiments of the disclosure, a computer-readable storage medium for storing computer programs is provided. When the computer programs are executed by a processor, a capability determination method is implemented.

According to an eighth aspect of the embodiments of the disclosure, a computer-readable storage medium for storing computer programs is provided. When the computer programs are executed by a processor, a capability indication method is implemented.

According to the embodiments of the disclosure, the communication device may inform the core network whether the target base station supports sending the paging reason by sending the first capability information to the core network. Accordingly, the core network can determine whether the target base station supports sending the paging reason, so that when the core network intends to instruct a base station to solve a communication conflict problem for a terminal, it can accurately select a base station that can send the paging reason to the terminal to solve the communication conflict problem for the terminal, which is conductive to ensure that the communication conflict problem can be resolved in time.

### BRIEF DESCRIPTION OF THE DRAWINGS

In order to clearly illustrate technical solutions of embodiments of the disclosure, a brief description of drawings used in the embodiments is given below. Obviously, the drawings in the following descriptions are only part embodiments of the disclosure, and for those skilled in the art, other drawings can be obtained according to these drawings without creative labor.
FIG. 1 is a schematic flowchart of a capability determination method according to an embodiment of the disclosure.
FIG. 2 is a flowchart of a capability determination method according to an embodiment of the disclosure.
FIG. 3 is a flowchart of a capability determination method according to an embodiment of the disclosure.
FIG. 4 is a flowchart of a capability determination method according to an embodiment of the disclosure.
FIG. 5 is a flowchart of a capability determination method according to an embodiment of the disclosure.
FIG. 6 is a flowchart of a capability indication method according to an embodiment of the disclosure.
FIG. 7 is a flowchart of a capability indication method according to an embodiment of the disclosure.
FIG. 8 is a block diagram of a capability determination apparatus according to an embodiment of the disclosure.
FIG. 9 is a block diagram of a capability determination apparatus according to an embodiment of the disclosure.
FIG. 10 is a block diagram of a capability determination apparatus according to an embodiment of the disclosure.
FIG. 11 is a block diagram of a capability determination apparatus according to an embodiment of the disclosure.
FIG. 12 is a block diagram of a capability indication apparatus according to an embodiment of the disclosure.
FIG. 13 is a block diagram of capability indication apparatus according to an embodiment of the disclosure.
FIG. 14 is a block diagram of a device for capability indication according to an embodiment of the disclosure.
FIG. 15 is a block diagram of a device for capability indication according to an embodiment of the disclosure.

### DETAILED DESCRIPTION

The technical solutions in the embodiments of the disclosure will be clearly and completely described below with reference to the accompanying drawings in the embodiments of the disclosure. Obviously, the described embodiments are only part of the embodiments of the disclosure, rather than all of the embodiments. Based on the embodiments in the disclosure, all other embodiments obtained by those skilled in the art without creative efforts fall within the scope of protection of this disclosure.

The terms used in the embodiments of the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

For the purpose of simplicity and ease of understanding, the terms "greater than", "less than", "higher than" and "lower than" are used in the disclosure to represent size relations. However, it can be understood by those skilled in the art that the term "greater than" also covers the meaning of "greater than or equal to", and "less than" also covers the meaning of "less than or equal to". The term "higher than" covers the meaning of "higher than or equal to", and the term "less than" covers the meaning of "less than or equal to".

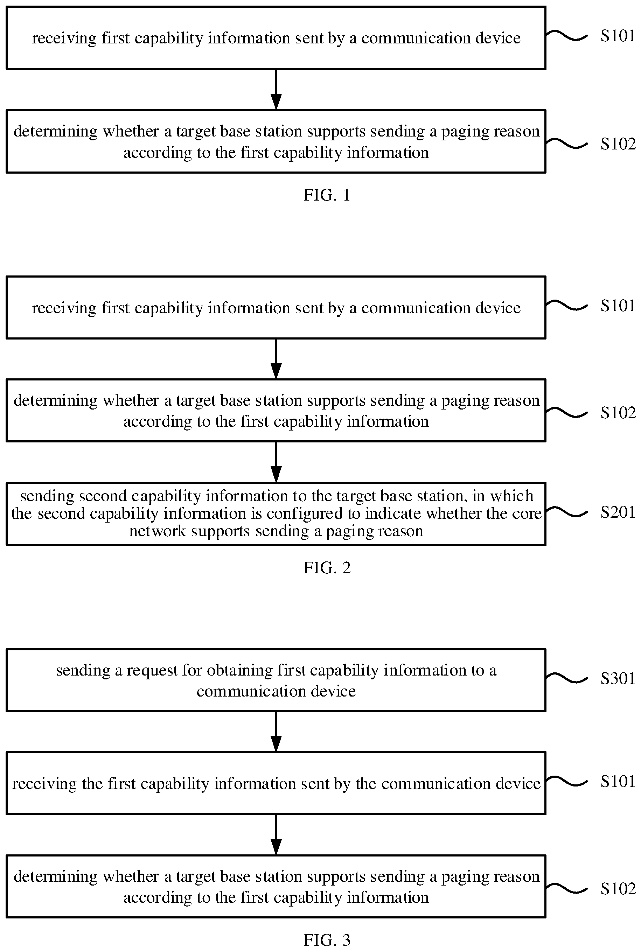

FIG. 1 is a flowchart of a capability determination method according to an embodiment of the disclosure. The capability determination method shown in the embodiment can be performed by a core network. The core network can communicate with a communication device, such as a terminal, a base station, etc. The terminal includes but is not limited to a communication device, such as a cell phone, a tablet, a wearable device, a sensor, and an Internet of Things (IoT) device. The base station includes but is not limited to a base station in a communication system, such as a 4G base station, a 5G base station, a 6G base station. etc.

Multiple Subscriber Identity Module (SIM) cards can be configured in a multi-card terminal. For example, the multiple SIM cards include a first SIM card and a second SIM card, in some cases, a conflict may occur (already occurred or about to occur) in communication operations between the first SIM card and the second SIM card.

The communication operations between which the conflict occurs may be paging-related operations, such as receiving a paging, responding to a paging, etc. For example, when the first SIM card performs a communication operation with a base station A, and the second SIM card intends to respond to a paging from a base station B, there may be a communication conflict between the communication operation between the first SIM card and the base station A and the operation of the second SIM card responding to the paging.

For the communication conflict problem caused by the paging-related operations, such as receiving a paging, responding to a paging, etc., the base station may resolve the communication conflict problem for the terminal by sending a paging reason to the terminal. For example, when it is determined that the above-described communication conflict problem occurs, the reason why the base station B pages the second SIM card can be determined based on the paging reason sent by a base station (which can be the base station B or another base station).

For example, the paging reason may be a signal that contains information about a service corresponding to the paging, priority information of the paging, and a response time delay allowed for the paging. For example, if the paging reason contains the information about the service corresponding to the paging, the terminal can determine a service b that the base station is to perform for paging the second SIM card according to the paging reason, and determine a service a corresponding to an ongoing communication operation between the first SIM card and the base station A. By comparing the service a and the service b, the terminal can determine to continue communicating with the base station A via the first SIM card rather than responding to the paging via the second SIM card (e.g., performing this operation when a priority of the service a is relatively higher), or to suspend the communication between the first SIM card and the base station A and respond to the paging via the second SIM card (e.g., performing this operation when a priority of the service b is relatively higher).

Although the base station can solve the communication conflict problem for the terminal by sending the paging reason to the terminal, not all base stations are able to send the paging reason. For example, some base stations can perform paging only and cannot send the paging reason. Moreover, the core network does not necessarily know the capabilities of all the base stations, and thus the core network may not know whether a certain base station supports sending a paging reason. In this case, if the core network instructs a base station to solve the communication conflict problem for the terminal, the base station may be unable to solve the communication conflict problem for the terminal by sending a paging reason to the terminal, which is easy to cause that the communication conflict problem cannot being solved for a long time, which affects the communication quality of the terminal.

As illustrated in FIG. 1, the capability determination method may include the following steps.

At step S101, first capability information sent by a communication device is received.

At step S102, it is determined whether a target base station supports sending a paging reason according to the first capability information.

In an embodiment, the communication device may determine whether the target base station supports sending the paging reason.

For example, the communication device may include at least one of the following devices: a terminal or a base station.

For ease of description, in the embodiments of the disclosure, sending from the core network to the terminal via an access network device or other devices is referred to as sending from the core network to the terminal. Correspondingly, sending from the terminal to the core network via an access network device or other devices is referred to as sending from the terminal to the core network.

The access network device or other devices includes but is not limited to a base station. Taking the base station as an example, the terminal sending information to the core network may mean that the terminal first sends the information to the base station, and then the base station sends the information to the core network. For example, the information sent is non-access-stratum information, the base station may send the information to the core network by adopting transparent transmission. The core network sending information to the terminal may mean that the core network first sends the information to the base station, and then the base station sends the information to the terminal. For example, the information sent is non-access-stratum information, the base station may send the information to the terminal by adopting transparent transmission.

If the communication device is a base station, the communication device may establish an interface with the target base station, to directly obtain the capability information of the target base station, and determine whether the target base station supports sending a paging reason based on the capability information.

If the communication device is a base station, the communication device may communicate with the terminal. The terminal first determines whether the target base station supports sending the paging reason, and then the terminal informs the communication device whether the target base station supports sending the paging reason.

If the communication device is a terminal, the communication device may communicate with the target base station, to obtain the capability information of the target base station, and determine whether or not the target base station supports sending a paging reason based on the capability information.

For example, the target base station may broadcast its own capability information, so that the communication device can obtain the capability information of the target base station by receiving the broadcast. The capability information may be carried in system information (SI), such as, minimum SI that is continuously broadcasted by the target base station, or other SI. Moreover, the target base station may also broadcast whether or not its neighboring base station supports sending a paging reason, for example, via other SI.

For example, the communication device may establish a communication connection (e.g., a radio resource control connection) with the target base station, and obtain the capacity information of the target base station through the communication connection.

In an embodiment, after determining whether the target base station supports sending the paging reason, the communication device may generate the first capability information. The first capability information is configured to indicate whether the target base station supports sending the paging reason. The first capability information can be sent to the core network.

According to the embodiments of the disclosure, the communication device may inform the core network whether the target base station supports sending the paging reason by sending the first capability information to the core network. Accordingly, the core network can determine whether the target base station supports sending the paging reason, so that when the core network intends to instruct a base station to solve the communication conflict problem for the terminal, it can accurately select a base station that is able to send the paging reason to the terminal to solve the communication conflict problem for the terminal, which is conductive to ensure that the communication conflict problem can be resolved in time.

In an embodiment, the method further includes:
determining whether a neighboring base station of the target base station supports sending a paging reason according to the first capability information.

The first capability information is also configured to indicate whether the neighboring base station of the target base station supports sending the paging reason, so that the core network can determine whether or not a base station in a larger range supports sending a paging reason.

The following is an exemplary description of the embodiments of the disclosure mainly for two situations where the communication device is a terminal and where the communication device is a base station.

In an embodiment, the communication device is a terminal, receiving the first capability information sent by the communication device includes: receiving the first capability information sent by the terminal in a process of the communication device accessing the core network. The first capability information is carried in at least one of the following signaling: an attachment request signaling, a registration request signaling, an attachment completion signaling, or a registration completion signaling.

If the communication device is a terminal, the core network may receive the first capability information from the terminal in the process in which the terminal accesses the core network. For a 4G network and a 5G network, the process in which the terminal accesses the core network may be different.

For the 4G network, the terminal may send the first capability information to the core network during an attaching process. For example, the first capability information may be carried in the attachment request signaling or the attachment completion signaling.

For the 5G network, the terminal can send the first capability information to the core network during a register process. For example, the first capability information may be carried in the registration request signaling or the registration completion signaling.

Therefore, the core network can receive the first capability information in time, and the first capability information can be sent to the core network by carrying the first capability information in the existing information, without having to send the first capability information separately, which is conducive to saving the communication resources.

In an embodiment, the communication device is a terminal, and receiving the first capability information sent by the communication device includes: receiving the first capability information sent by the terminal after the communication device accesses the core network. The first capability information is carried in a non-access-stratum signaling.

If the communication device is a terminal, the core network may receive the first capability information from the terminal after the terminal accesses the core network. For example, the terminal may carry the first capability information in the non-access stratum-signaling and send the first capability information to the core network.

In an embodiment, the communication device is a base station, and receiving the first capability information sent by the communication device includes: receiving the first capability information sent by the base station in a process of establishing an interface with the communication device. The first capability information is carried in at least one of the following signaling: a next generation application protocol (NGAP) signaling or a S1 application protocol (S1AP) signaling.

If the communication device is a base station, the core network can receive the first capability information from the base station in a process of establishing an interface between the base station and the core network. For the 4G network and the 5G network, the interface established between the base station and the core network can be different.

For the 4G network, the interface established between the base station and the core network is a S1 interface, the first capability information can be sent to the core network by carrying the first capability information in a signaling related to the S1 interface, i.e., the S1AP signaling. For example, the S1AP signaling can be a S1 SETUP REQUEST signaling, i.e., a S1 interface establishment request signaling.

For the 5G network, the interface established between the base station and the core network is an NG interface, the first capability information can be sent to the core network by carrying the first capability information in a signaling related to the NG interface, i.e., the NGAP signaling. For example, the NGAP signaling can be an NG SETUP REQUEST signaling, i.e., an NG interface establishment request signaling. In detail, a new information element (IE) can be introduced in the NG SETUP REQUEST signaling to carry the first capability information.

Therefore, the core network can receive the first capability information in time, and the first capability information can be sent to the core network by carrying it in the existing information, without having to send the first capability information separately, which is conducive to saving the communication resources.

It should be noted that if the communication device is a base station, the base station may be referred to the target base station. That is, the target base station can inform the core network about whether the target base station supports sending a paging reason during the process of establishing an interface with the core network.

FIG. 2 is a flowchart of a capability determination method according to an embodiment of the disclosure. As illustrated in FIG. 2, the method includes the following steps.

At step S201, second capability information is sent to the target base station, in which the second capability information is configured to indicate whether the core network supports sending a paging reason.

In an embodiment, generally, a paging source for paging the terminal is the core network. When the core network intends to page a certain terminal, it can determine a tracking area in which the terminal is located, and then instruct all base stations in the tracking area to page the terminal.

However, in some cases, although the core network can page, it does not support sending a paging reason, and the paging reason sent by the base station is generally from the core network. Therefore, in the case where the core network does not support sending the paging reason, the base station that conducts the paging based on the instruction of the core network does not support sending the paging reason either, and thus the base station cannot solve the communication conflict problem for the terminal by sending the paging reason to the terminal.

According to the embodiment, the core network may inform the target base station about whether or not the core network supports sending the paging reason by sending the second capability information to the target base station, so that the target base station can determine whether or not the core network supports sending the paging reason, and then determine whether or not the target base station itself supports sending the paging reason. For example, if the core network does not support sending the paging reason, the target base station does not support sending the paging reason either.

In an embodiment, sending the second capability information to the target base station includes: sending the second capability information to the target base station in a process of establishing an interface with the target base station. The second capability information is carried in at least one of the following signaling: a NGAP signaling or a S1AP signaling.

The core network may send the second capability information to the target base station during the process of establishing the interface between the target base station and the core network. For the 4G network and the 5G network, the interface established between the target base station and the core network may be different.

For the 4G network, the interface established between the base station and the core network is a S1 interface, the base station can send the second capability information to the core network by carrying the second capability information in a signaling related to the S1 interface, i.e., the S1AP signaling. For example, the S1AP signaling can be a S1 SETUP RESPONSE signaling, i.e., a S1 interface establishment response signaling.

For the 5G network, the interface established between the base station and the core network is an NG interface, the base station can send the second capability information to the core network by carrying the second capability information in a signaling related to the NG interface, i.e., the NGAP signaling. For example, the NGAP signaling can be an NG SETUP RESPONSE signaling, i.e., an NG interface establishment response signaling. In detail, a new IE can be introduced in the NG SETUP RESPONSE signaling to carry the second capability information.

FIG. 3 is a flowchart of a capability determination method according to an embodiment of the disclosure. As illustrated in FIG. 3, before receiving the first capability information sent by the communication device, the method includes the following steps.

At step S301, a request for obtaining the first capability information is sent to the communication device.

In an embodiment, when the core network intends to determine whether the target base station supports sending the paging reason, it may send the request for obtaining the first capability information to the communication device. After receiving the request, the communication device sends the first capability information to the core network, so that the core network can determine whether the target base station supports sending the paging reason. In this way, it is possible to avoid wasting resources caused by sending the first capability information to the core network when the core network does not need the first capability information.

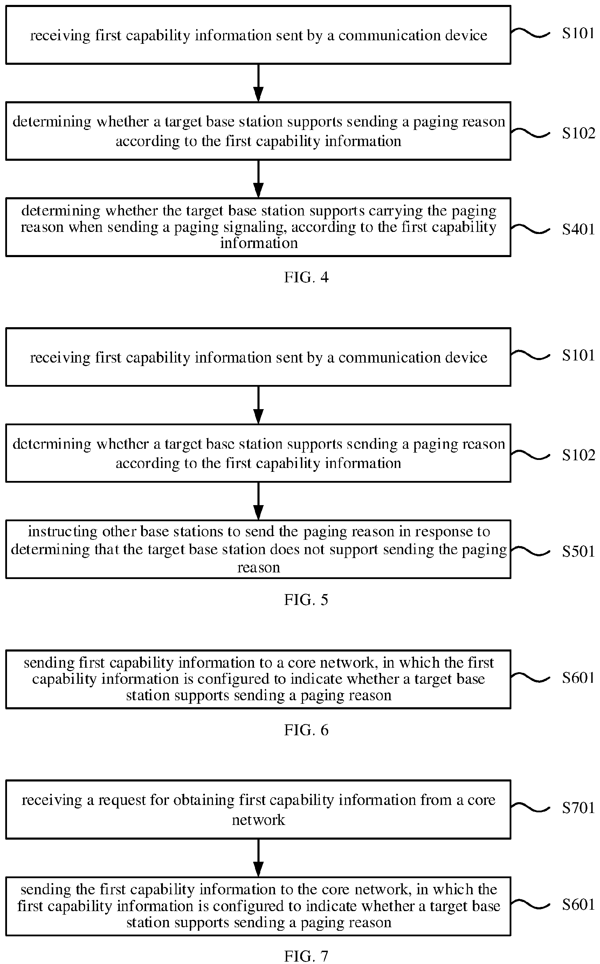

FIG. 4 is a flowchart of a capability determination method according to an embodiment of the disclosure. As illustrated in FIG. 4, the method includes the following steps.

At step S401, whether the target base station supports carrying the paging reason when sending a paging signaling is determined according to the first capability information.

In an embodiment, although some base stations support sending the paging reason, they cannot carry the paging reason when sending the paging signaling, so that when the base station subsequently resolves the communication conflict problem for the terminal, it has to send the paging reason separately, which may result in a time delay, thereby not satisfying the needs of the terminal.

According to the embodiment, in addition to indicating that the target base station supports sending the paging reason, the first capability information is further configured to indicate whether or not the target base station supports carrying the paging reason when sending the paging signaling.

In this way, the core network can determine whether the target base station supports carrying the paging reason when sending the paging signaling, so that when the core network intends to instruct the base station to page the terminal, it can accurately select a base station that is capable of carrying the paging reason when sending the paging signaling to page the terminal.

Since the base station can carry the paging reason when sending the paging signaling, the terminal can know the paging reason if there is a communication conflict after receiving the paging signaling, and it does not need to obtain the paging reason from the base station, which is conducive to reducing the time delay in resolving the communication conflict.

FIG. 5 is a flowchart of a capability determination method according to an embodiment of the disclosure. As illustrated in FIG. 5, the method includes the following steps.

At step S501, other base stations are instructed to send the paging reason in response to determining that the target base station does not support sending the paging reason.

In an embodiment, when the core network determines that the target base station does not support sending the paging reason, it may instruct other base stations to send the paging reason, for example, by directly broadcasting the paging reason, or sending the paging reason to the terminal through a communication connection after establishing the communication connection with the terminal, so that the terminal can receive the paging reason from other base stations to solve the communication conflict problem in time.

The core network may predetermine other base stations that support sending the paging reason, and in case that the target base station does not support sending the paging reason, it can instruct other base stations to send the paging reason. For example, in a case of broadcasting the paging reason, the paging reason may carry an identifier of the terminal and a paging identifier sent by the target base station to the terminal, so that the terminal can determine that the paging reason is a paging reason for the target base station to send paging to the terminal.

In an embodiment, other base stations include, but are not limited to, a neighboring base station of the target base station or a base station that are in the same tracking area as the target base station. Since these base stations are generally not too far away from the terminal, it is benefit to the terminal to receive the paging reason sent by these base stations.

FIG. 6 is a flowchart of a capability indication method according to an embodiment of the disclosure. The capability indication method in this embodiment may be performed by a communication device. The communication device may be a terminal or a base station. The terminal includes, but is not limited to, a communication device, such as a cellular phone, a tablet computer, a wearable device, a sensor, and an IoT device, etc. The base station includes, but is not limited to, a base station in a communication system, such as a 4G base station, a 5G base station, and a 6G base station, etc.

As illustrated in FIG. 6, the capability indication method includes the following steps.

At step S601, first capability information is sent to a core network, in which the first capability information is configured to indicate whether a target base station supports sending a paging reason.

In an embodiment, the communication device includes at least one of the following devices:
a terminal or a base station.

If the communication device is a base station, the communication device may establish an interface with the target base station, so that the communication device can directly obtain the capability information of the target base station and determine whether the target base station supports sending a paging reason based on the capability information.

If the communication device is a base station, the communication device may communicate with the terminal. The terminal determines whether the target base station supports sending the paging reason and inform the communication device whether the target base station supports sending the paging reason.

If the communication device is a terminal, the communication device may communicate with the target base station, to obtain the capability information of the target base station and determine whether the target base station supports sending the paging reason based on the capability information.

For example, the target base station may broadcast its own capability information, so that the communication device can obtain the capability information of the target base station by receiving the broadcast. The capability information may be carried in SI, such as, minimum SI that is continuously broadcasted by the target base station, or other SI. Moreover, the target base station may also broadcast whether or not its neighboring base station supports sending a paging reason, for example, via other SI.

For example, the communication device may establish a communication connection (e.g., a radio resource control connection) with the target base station, and then obtain the capability information of the target base station via the communication connection.

In an embodiment, after determining whether the target base station supports sending the paging reason, the communication device may generate the first capability information. The first capability information is configured to indicate whether the target base station supports sending the paging reason. The first capability information can be sent to the core network.

According to the embodiments of the disclosure, the communication device may inform the core network whether the target base station supports sending the paging reason by sending the first capability information to the core network. Accordingly, the core network can determine whether the target base station supports sending the paging reason, so that when the core network intends to instruct a base station to solve the communication conflict problem for the terminal, it can accurately select a base station that is able to send the paging reason to the terminal to solve the communication conflict problem for the terminal, which is conductive to ensure that the communication conflict problem can be resolved in time.

In an embodiment, the communication device is a terminal, sending the first capability information to the core network includes: sending the first capability information to the core network in a process of accessing the core network. The first capability information is carried in at least one of the following signaling: an attachment request signaling, a registration request signaling, an attachment completion signaling, or a registration completion signaling.

If the communication device is a terminal, the core network may receive the first capability information from the terminal in the process in which the terminal accesses the core network. For a 4G network and a 5G network, the process in which the terminal accesses the core network may be different.

For the 4G network, the terminal may send the first capability information to the core network during an attaching process. For example, the first capability information may be carried in the attachment request signaling or the attachment completion signaling.

For the 5G network, the terminal can send the first capability information to the core network during a register process. For example, the first capability information may be carried in the registration request signaling or the registration completion signaling.

Therefore, the core network can receive the first capability information in time, and the first capability information can be sent to the core network by carrying the first capability information in the existing information, without having to send the first capability information separately, which is conducive to saving the communication resources.

In an embodiment, the communication device is a terminal, sending the first capability information to the core network includes: sending the first capability information to the core network after the process of accessing the core network. The first capability information is carried in a non-access-stratum signaling.

If the communication device is a terminal, the core network may receive the first capability information from the terminal after the terminal accesses the core network. For example, the terminal may carry the first capability information in the non-access-stratum signaling and send the first capability information to the core network.

In an embodiment, the communication device is a base station, and sending the first capability information to the core network includes: sending the first capability information to the core network in a process of establishing an interface with the core network. The first capability information is carried in at least one of the following signaling: a NGAP signaling or a S1AP signaling.

If the communication device is a base station, the core network may receive the first capability information from the base station in a process of establishing an interface with the base station. For a 4G network and a 5G network, the interface established between the base station and the core network may be different.

For the 4G network, the interface established between the base station and the core network is a S1 interface, the first capability information can be sent to the core network by carrying the first capability information in a signaling related to the S1 interface, i.e., the S1AP signaling. For example, the S1AP signaling can be a S1 SETUP REQUEST signaling, i.e., a S1 interface establishment request signaling.

For the 5G network, the interface established between the base station and the core network is an NG interface, the first capability information can be sent to the core network by carrying the first capability information in a signaling related to the NG interface, i.e., the NGAP signaling. For example, the NGAP signaling can be an NG SETUP REQUEST signaling, i.e., an NG interface establishment request signaling. In detail, a new IE can be introduced in the NG SETUP REQUEST signaling to carry the first capability information.

Therefore, the core network can receive the first capability information in time, and the first capability information can be sent to the core network by carrying it in the existing information, without having to send the first capability information separately, which is conducive to saving the communication resources.

It should be noted that if the communication device is a base station, the base station may be referred to the target base station. That is, the target base station can inform the core network about whether the target base station supports sending a paging reason during the process of establishing an interface with the core network.

FIG. 7 is a flowchart of a capability indication method according to an embodiment of the disclosure. As illustrated in FIG. 7, before sending the first capability information to the core network, the method includes the following steps.

At step S701, a request for obtaining the first capability information is received from the core network.

In an embodiment, generally, a paging source for paging the terminal is the core network. When the core network intends to page a certain terminal, it can determine a tracking area in which the terminal is located, and then instruct all base stations in the tracking area to page the terminal.

However, in some cases, although the core network can page, it does not support sending a paging reason, and the paging reason sent by the base station is generally from the core network. Therefore, in the case where the core network does not support sending the paging reason, the base station that conducts the paging based on the instruction of the core network does not support sending the paging reason either, and thus the base station cannot solve the communication conflict problem for the terminal by sending the paging reason to the terminal.

According to the embodiment, the core network may inform the target base station about whether or not the core network supports sending the paging reason by sending the second capability information to the target base station, so that the target base station can determine whether or not the core network supports sending the paging reason, and then determine whether or not the target base station itself supports sending the paging reason. For example, if the core network does not support sending the paging reason, the target base station does not support sending the paging reason either.

In an embodiment, the first capability information is further configured to indicate whether a neighboring base station of the target base station supports sending a paging reason. The first capability information is further configured to indicate whether the neighboring base station of the target base station supports sending the paging reason, so that the core network can determine whether base stations in a larger range support sending a paging reason.

In an embodiment, the first capability information is further configured to indicate whether the target base station supports carrying the paging reason when sending a paging signaling.

In an embodiment, although some base stations support sending the paging reason, they cannot carry the paging reason when sending the paging signaling, so that when the base station subsequently resolves the communication conflict problem for the terminal, it has to send the paging reason separately, which may result in a time delay, thereby not satisfying the needs of the terminal.

According to the embodiment, in addition to indicating that the target base station supports sending the paging reason, the first capability information is further configured to indicate whether or not the target base station supports carrying the paging reason when sending the paging signaling.

In this way, the core network can determine whether the target base station supports carrying the paging reason when sending the paging signaling, so that when the core network intends to instruct the base station to page the terminal, it can accurately select a base station that is capable of carrying the paging reason when sending the paging signaling to page the terminal.

Since the base station can carry the paging reason when sending the paging signaling, the terminal already knows the paging reason if there is a communication conflict after receiving the paging signaling, and it does not need to obtain the paging reason from the base station, which is conducive to reducing the time delay in resolving the communication conflict.

Corresponding to the above embodiments of the capability determination method and the capability indication method, the disclosure also provides embodiments of a capability determination apparatus and a capability indication apparatus.

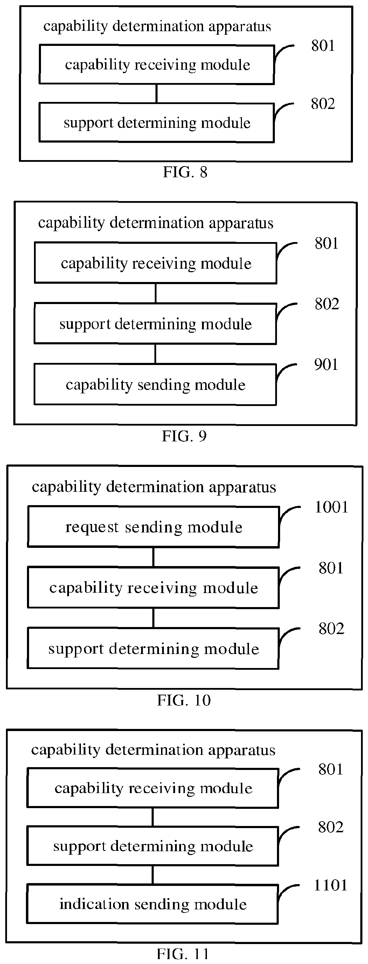

FIG. 8 is a block diagram of a capability determination apparatus according to an embodiment of the disclosure. The capability determination apparatus shown in the embodiment may be applicable to a core network. The core network may communicate with a communication device such as a terminal, a base station, etc. The terminal includes but is not limited to a communication device such as a cell phone, a tablet computer, a wearable device, a sensor, and an IoT device. The base station includes but is not limited to a base station in a communication system, such as a 4G base station, a 5G base station, and a 6G base station, etc.

As illustrated in FIG. 8, the capability determination apparatus includes: a capability receiving module 801 and a support determining module 802.

The capability receiving module 801 is configured to receive first capability information sent by a communication device.

The support determining module 802 is configured to determine whether a target base station supports sending a paging reason according to the first capability information.

In an embodiment, the communication device includes at least one of the following devices: a terminal or a base station.

In an embodiment, the communication device is a terminal, the capability receiving module 801 is configured to: receive the first capability information sent by the terminal in a process of the communication device accessing the core network.

In an embodiment, the first capability information is carried in at least one of the following signaling: an attachment request signaling, a registration request signaling, an attachment completion signaling, or a registration completion signaling.

In an embodiment, the communication device is a terminal, the capability receiving module 801 is configured to: receive the first capability information sent by the terminal after the communication device accesses the core network.

In an embodiment, the first capability information is carried in a non-access-stratum signaling.

In an embodiment, the communication device is a base station, the capability receiving module 801 is configured to: receive the first capability information sent by the base station in a process of establishing an interface with the communication device.

In an embodiment, the first capability information is carried in at least one of the following signaling: a NGAP signaling or a S1AP signaling.

FIG. 9 is a block diagram of a capability determination apparatus according to an embodiment of the disclosure. As illustrated in FIG. 9, the apparatus further includes: a capability sending module 901.

The capability sending module 901 is configured to send second capability information to the target base station, in which the second capability information is configured to indicate whether the core network supports sending a paging reason.

In an embodiment, the capability sending module 901 is configured to send the second capability information to the target base station in a process of establishing an interface with the target base station.

In an embodiment, the second capability information is carried in at least one of the following signaling: a NGAP signaling or a S1AP signaling.

FIG. 10 is a block diagram of a capability determination apparatus according to an embodiment of the disclosure. As illustrated in FIG. 10, the apparatus further includes: a request sending module 1001.

The request sending module 1001 is configured to send a request for obtaining the first capability information to the communication device.

In an embodiment, the support determining module 802 is further configured to: determine whether a neighboring base station of the target base station supports sending a paging reason according to the first capability information.

In an embodiment, the support determining module 802 is further configured to: determine, according to the first capability information, whether the target base station supports carrying the paging reason when sending a paging signaling.

FIG. 11 is a block diagram of a capability determination apparatus according to an embodiment of the disclosure. As illustrated in FIG. 11, the apparatus further includes: an indication sending module 1101.

The indication sending module 1101 is configured to instruct other base stations to send the paging reason in response to determining that the target base station does not support sending the paging reason.

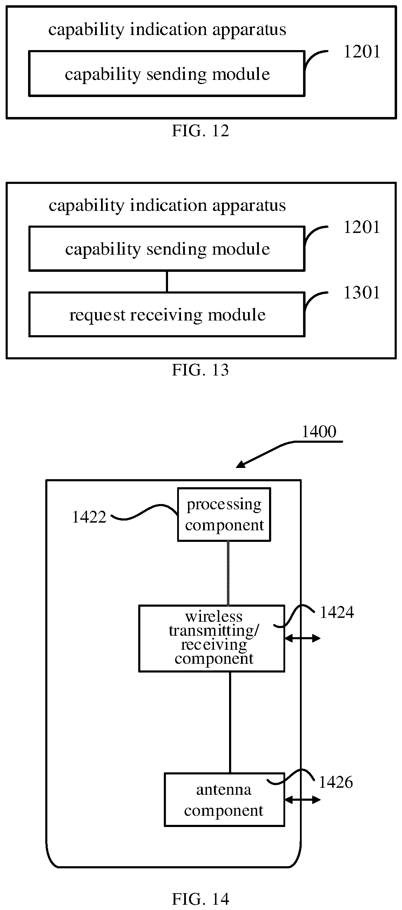

FIG. 12 is a block diagram of a capability indication apparatus according to an embodiment of the disclosure. The capability indication apparatus shown in the embodiment may be applicable to a communication device. The communication device may be a terminal or a base station. The terminal includes but is not limited to a communication device such as a cell phone, a tablet computer, a wearable device, a sensor, and an IoT device, etc. The base station includes but is not limited to a base station in a communication systems, such as a 4G base station, a 5G base station, and a 6G base station, etc.

As illustrated in FIG. 12, the capability indication apparatus includes: a capability sending module 1201.

The capability sending module 1201 is configured to send first capability information to a core network, in which the first capability information is configured to indicate whether a target base station supports sending a paging reason.

In an embodiment, the communication device includes at least one of the following devices: a terminal or a base station.

In an embodiment, the communication device is a terminal, the capability sending module 1201 is configured to send the first capability information to the core network in a process of accessing the core network.

In an embodiment, the first capability information is carried in at least one of the following signaling: an attachment request signaling, a registration request signaling, an attachment completion signaling, or a registration completion signaling.

In an embodiment, the communication device is a terminal, the capability sending module 1201 is configured to send the first capability information to the core network after the process of accessing the core network.

In an embodiment, the first capability information is carried in a non-access-stratum signaling.

In an embodiment, the communication device is a base station, the capability sending module 1201 is configured to send the first capability information to the core network in a process of establishing an interface with the core network.

In an embodiment, the first capability information is carried in at least one of the following signaling: a NGAP signaling or a S1AP signaling.

FIG. 13 is a block diagram of a capability indication apparatus according to an embodiment of the disclosure. As illustrated in FIG. 13, the apparatus further includes: a request receiving module 1301.

The request receiving module 1301 is configured to receive a request for obtaining the first capability information from the core network.

In an embodiment, the first capability information is further configured to indicate whether a neighboring base station of the target base station supports sending a paging reason.

In an embodiment, the first capability information is further configured to indicate whether the target base station supports carrying the paging reason when sending a paging signaling.

With respect to the apparatuses in the above embodiments, the specific manner in which each module performs an operation has been described in detail in the relevant method embodiments, and will not be described in detail herein.

Since the apparatus embodiments basically correspond to the method embodiments, relevant contents can refer to partial description of the method embodiments. The apparatus embodiments described above are merely schematic, in which the modules described as separate components may or may not be physically separated, and the components shown as modules may or may not be physical modules, i.e., they may be located in a single place or may be distributed to a plurality of network modules. Some or all of these modules may be selected according to actual needs to fulfill the purpose of the solution of the embodiments, which can be understood and implemented by those skilled in the art without creative labor.

The embodiments of the disclosure also provide a communication device, including a processor and a memory for storing computer programs. When the computer programs are executed by the processor, the capability determination method described in any of the above embodiments is implemented.

The embodiments of the disclosure also provide a communication device, including a processor and a memory for storing computer programs. When the computer programs are executed by the processor, the capability indication method described in any of the above embodiments is implemented.

The embodiments of the disclosure also provide a computer-readable storage medium for storing computer programs. When the computer programs are executed by a processor, the steps in the capability determination method described in any of the above embodiments are implemented.

The embodiments of the disclosure also provide a computer-readable storage medium for storing computer programs. When the computer programs are executed by a processor, the steps in the capability indication method described in any of the above embodiments are implemented.

FIG. 14 is a block diagram of a device 1400 for capability indication according to an embodiment of the disclosure. The device 1400 may be provided as a base station. As illustrated in FIG. 14, the device 1400 includes a processing component 1422, a wireless transmitting/receiving component 1424, an antenna component 1426, and a signal processing portion specific to a radio interface. The processing component 1422 may further include one or more processors. One of the processors in the processing component 1422 may be configured to implement the steps in the capability indication method described in any of the above embodiments.

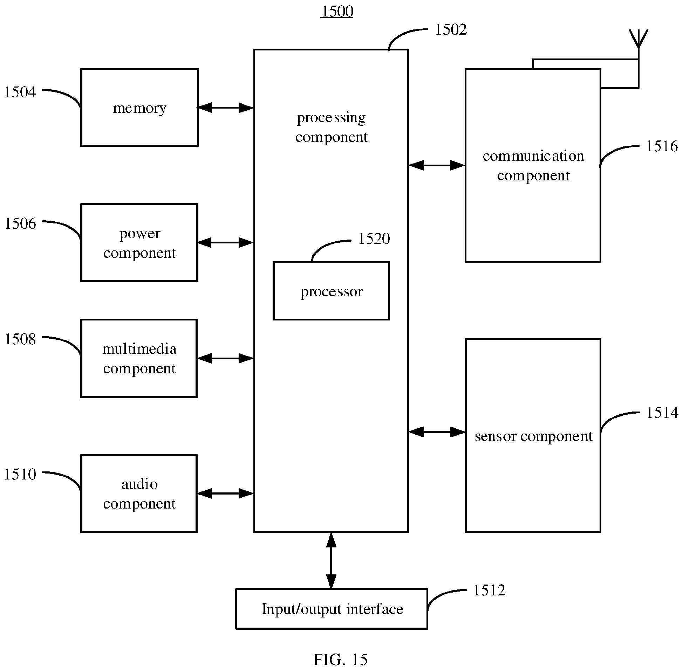

FIG. 15 is a block diagram of a device 1500 for capability indication according to an embodiment of the disclosure. For example, the device 1500 may be a mobile phone, a computer, a digital broadcasting terminal, a message transceiver device, a game console, a tablet device, a medical device, a fitness device and a personal digital assistant, etc.

As illustrated in FIG. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to implement all or part of the steps in the above described capability indication method. Moreover, the processing component 1502 may include one or more modules which facilitate the interaction between the processing component 1502 and other components. For example, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, videos, etc. The memory 1504 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1508 includes a front-facing camera and/or a rear-facing camera. When the device 1500 is in an operating mode, such as a shooting mode or a video mode, the front-facing camera and/or the rear-facing camera can receive external multimedia data. Each front-facing camera and rear-facing camera may be a fixed optical lens system or has a focal length and optical zoom capability.

The audio component 1510 is configured to output and/or input audio signals. For example, the audio component 1510 includes a microphone (MIC) configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a Complementary Metal Oxide Semiconductor (CMOS) or Charge-Coupled Device (CCD) image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as Wi-Fi, 2G or 3G, 4G LTE, 5G NR or a combination thereof. In an exemplary embodiment, the communication component 1516 receives a broadcast signal from an external broadcast management system or broadcast associated information via a broadcast channel. In an exemplary embodiment, the communication component 1516 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the device 1500 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described capability indication methods.

In an exemplary embodiment, there is also provided a non-transitory computer readable storage medium including instructions, such as the memory 1504. The above instructions may be executed by the processor 1520 in the device 1500, for performing the above capability indication methods. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, usages, or adaptations of the embodiments of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a... " does not exclude the presence of additional identical elements in the process, method, article or device that comprises the said element.

The above detailed description of the methods and devices provided by the embodiments of the disclosure is provided herein, and specific examples are used herein to illustrate the principles and implementations of the disclosure, and the above illustrations of the embodiments are only used to assist in the understanding of the methods of the disclosure and the core ideas thereof. Meanwhile, for those skilled in the art, based on the ideas of the disclosure, there will be changes in the specific implementations and the usage scope, and in summary, the contents of the specification should not be construed as a limitation on the disclosure.

## Claims

1. A capability determination method, performed by a core network, comprising:
receiving first capability information sent by a communication device; and
determining whether a target base station supports sending a paging reason according to the first capability information.

2. The method of claim 1, wherein the communication device comprises at least one of:
a terminal or a base station.

3. The method of claim 2, wherein the communication device is the terminal, and receiving the first capability information sent by the communication device comprises:
receiving the first capability information sent by the terminal in a process of the communication device accessing the core network.

4. The method of claim 3, wherein the first capability information is carried in at least one of:
an attachment request signaling, a registration request signaling, an attachment completion signaling, or a registration completion signaling.

5. The method of claim 2, wherein the communication device is the terminal, and receiving the first capability information sent by the communication device comprises:
receiving the first capability information sent by the terminal after the communication device accesses the core network.

6. The method of claim 5, wherein the first capability information is carried in a non-access-stratum signaling.

7. The method of claim 2, wherein the communication device is the base station, and receiving the first capability information sent by the communication device comprises:
receiving the first capability information sent by the base station in a process of establishing an interface with the communication device.

8. The method of claim 7, wherein the first capability information is carried in at least one of:
a next generation application protocol (NGAP) signaling or a S 1 application protocol (S1AP) signaling.

9. The method of any one of claims 1-8, further comprising:
sending second capability information to the target base station, wherein the second capability information is configured to indicate whether the core network supports sending a paging reason.

10. The method of claim 9, wherein sending the second capability information to the target base station comprises:
sending the second capability information to the target base station in a process of establishing an interface with the target base station.

11. The method of claim 10, wherein the second capability information is carried in at least one of:
a NGAP signaling or a S1AP signaling.

12. The method of any one of claims 1-8, before receiving the first capability information sent by the communication device, further comprising:
sending a request for obtaining the first capability information to the communication device.

13. The method of any one of claims 1-8, further comprising:
determining whether a neighboring base station of the target base station supports sending a paging reason according to the first capability information.

14. The method of any one of claims 1-8, further comprising:
determining, according to the first capability information, whether the target base station supports carrying the paging reason when sending a paging signaling.

15. The method of any one of claims 1-8, further comprising:
instructing other base stations to send the paging reason in response to determining that the target base station does not support sending the paging reason.

16. A capability indication method, performed by a communication device, comprising:
sending first capability information to a core network, wherein the first capability information is configured to indicate whether a target base station supports sending a paging reason.

17. The method of claim 16, wherein the communication device comprises at least one of:
a terminal or a base station.

18. The method of claim 17, wherein the communication device is the terminal, and sending the first capability information to the core network comprises:
sending the first capability information to the core network in a process of accessing the core network.

19. The method of claim 18, wherein the first capability information is carried in at least one of:
an attachment request signaling, a registration request signaling, an attachment completion signaling, or a registration completion signaling.

20. The method of claim 17, wherein the communication device is the terminal, and sending the first capability information to the core network comprises:
sending the first capability information to the core network after the process of accessing the core network.

21. The method of claim 20, wherein the first capability information is carried in a non-access-stratum signaling.

22. The method of claim 17, wherein the communication device is the base station, and sending the first capability information to the core network comprises:
sending the first capability information to the core network in a process of establishing an interface with the core network.

23. The method of claim 22, wherein the first capability information is carried in at least one of:
a next generation application protocol (NGAP) signaling or a S 1 application protocol (S1AP) signaling.

24. The method of any one of claims 16-23, before sending the first capability information to the core network, further comprising:
receiving a request for obtaining the first capability information from the core network.

25. The method of any one of claims 16-23, wherein the first capability information is further configured to indicate whether a neighboring base station of the target base station supports sending a paging reason.

26. The method of any one of claims 16-23, wherein the first capability information is further configured to indicate whether the target base station supports carrying the paging reason when sending a paging signaling.

27. A capability determination apparatus, performed by a core network, comprising:
a capability receiving module, configured to receive first capability information sent by a communication device; and
a support determining module, configured to determine whether a target base station supports sending a paging reason according to the first capability information.

28. A capability indication apparatus, performed by a communication device, comprising:
a capability sending module, configured to send first capability information to a core network, wherein the first capability information is configured to indicate whether a target base station supports sending a paging reason.

29. A communication device, comprising:
a processor;
a memory for storing computer programs;
wherein, when the computer programs are executed by the processor, the capability determination method of any one of claims 1 to 15 is implemented.

30. A communication device, comprising:
a processor;
a memory for storing computer programs;
wherein, when the computer programs are executed by the processor, the capability indication method of any one of claims 16 to 26 is implemented.

31. A computer-readable storage medium for storing computer programs, wherein when the computer programs are executed by a processor, the steps in the capability determination method of any one of claims 1 to 15 are implemented.

32. A computer-readable storage medium for storing computer programs, wherein when the computer programs are executed by a processor, the steps in the capability indication method of any one of claims 16 to 26 are implemented.
